# EUROPEAN PATENT APPLICATION

(11) **EP 4 852 165 A1**
(43) Date of publication of application: **09.12.2026**
(21) Application number: 26154659.2
(22) Date of filing: 28.01.2026
(51) Int. Cl.: H01M 50/153, H01M 50/588, H01M 50/152, H01M 50/55, H01M 50/559, H01M 50/645

(54) **SECONDARY BATTERY**

(30) Priority: 02.06.2025 KR 20250071810
(71) Applicant: SAMSUNG SDI CO., LTD., Yongin-si, Gyeonggi-do 17084 (KR)
(72) Inventor: LEE, Heonwoong, 17084 Yongin-Si (KR); MOON, Dongsik, 17084 Yongin-Si (KR)
(74) Representative: Maiwald GmbH

(57) **Abstract**

A secondary battery according to some embodiments of the present disclosure may include an electrode assembly, a receiving can having an open portion to accommodate the electrode assembly, and a cap assembly closing the open portion of the receiving can. The electrode assembly may include a first electrode, a separator, a second electrode, a first electrode tab connected to the first electrode, and a second electrode tab connected to the second electrode. The cap assembly may include a first electrode terminal connected to the first electrode tab, a second electrode terminal connected to the second electrode tab, a cap plate including a first terminal hole through which the first electrode terminal may be exposed to an outside of the cap assembly, a second terminal hole through which the second electrode terminal may be exposed to the outside of the cap assembly, an electrolyte injection hole accepting an electrolyte such that the electrolyte may be injected into the receiving can through the electrolyte injection hole, and a sealer sealing the electrolyte injection hole.

## Description

### BACKGROUND

### FIELD

The present disclosure relates to a secondary battery.

### DESCRIPTION OF THE RELATED ART

Recently, as the demand for wearable devices such as headphones, earphones, smart watches, and body-attachable medical devices using Bluetooth has increased, the demand for secondary batteries having a high energy density and a sufficiently small size has also been increasing. Such a secondary battery has a height significantly smaller than its width according to the characteristics of the use environment, and includes a receiving can that accommodates an electrode assembly having a jelly roll shape and a cap assembly that is joined to an upper portion of the receiving can to seal the electrode assembly from the outside.

In high-temperature and high-humidity resistance evaluations, a short circuit phenomenon may occur due to moisture between a cap plate and a terminal plate depending on the arrangement state of a cap insulating layer, which may cause a problem with the safety of the battery.

The above information disclosed in this Background section is for enhancement of understanding of the background of the present disclosure, and therefore, it may contain information that does not constitute related (or prior) art.

### SUMMARY

An object of the present disclosure is to provide a secondary battery for solving the above-mentioned problem.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an aspect of the present disclosure for solving the above technical problem, a secondary battery may include an electrode assembly including a first electrode, a separator, a second electrode, a first electrode tab connected to the first electrode, and a second electrode tab connected to the second electrode; a receiving can having one open portion to accommodate the electrode assembly; and a cap assembly that closes the open portion of the receiving can and includes a first electrode terminal connected to the first electrode tab and a second electrode terminal connected to the second electrode tab. The cap assembly may include a cap plate including a first terminal hole through which the first electrode terminal is exposed to the outside, a second terminal hole through which the second electrode terminal is exposed to the outside, and an electrolyte injection hole configured for an electrolyte to be injected into the receiving can; and a sealer configured to seal the electrolyte injection hole.

According to some embodiments of the present disclosure, by arranging a first electrode terminal (negative electrode terminal) and a second electrode terminal (positive electrode terminal) included in a cap assembly to be spaced apart from each other, a short circuit phenomenon between a first electrode and a second electrode may be prevented.

According to some embodiments of the present disclosure, a cap assembly includes a first electrode terminal and a second electrode terminal, and it is possible to change the material of a receiving can and a cap plate that seals the receiving can.

According to some embodiments of the present disclosure, a receiving can and a cap plate may be formed of a non-metallic material with high strength, heat resistance, and chemical resistance.

According to some embodiments of the present disclosure, by coupling a non-metallic receiving can and cap plate to each other by a thermosetting method rather than welding, the risk of damage to an electrode assembly housed inside the receiving can due to welding may be prevented.

According to some embodiments of the present disclosure, by injecting an electrolyte through an electrolyte injection hole formed in a cap assembly after the receiving can and the cap assembly are coupled, the phenomenon of the electrolyte overflowing from the receiving can may be prevented.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure and further describe aspects and features of the present disclosure together with the detailed description of the present disclosure. Thus, the present disclosure should not be construed as being limited to the drawings.
FIG. 1 is a perspective view of a secondary battery according to some embodiments of the present disclosure.
FIG. 2 is a diagram illustrating a cross-section taken along line A-A of FIG. 1 according to some embodiments of the present disclosure.
FIG. 3 is a diagram illustrating a top surface of a cap assembly according to some embodiments of the present disclosure.
FIG. 4 is a diagram illustrating a bottom surface of a cap assembly according to some embodiments of the present disclosure.
FIG. 5 is a diagram illustrating a cap plate according to some embodiments of the present disclosure.
FIG. 6 is a diagram illustrating a cap insulating layer according to some embodiments of the present disclosure.
FIG. 7 is a diagram illustrating a first electrode terminal and a second electrode terminal according to some embodiments of the present disclosure.
FIGS. 8 and 9 are diagrams that each illustrate a sealer according to some embodiments of the present disclosure.
FIG. 10 is a cross-sectional view of a secondary battery including a first insulator according to some embodiments of the present disclosure.
FIG. 11 is a cross-sectional view of a secondary battery including a second insulator according to some embodiments of the present disclosure.
FIG. 12 is a perspective view of a secondary battery according to some embodiments of the present disclosure.
FIG. 13 is a diagram illustrating a cross-section taken along line B-B of FIG. 12.
FIG. 14 is a diagram illustrating a top surface of a cap assembly according to some embodiments of the present disclosure.
FIG. 15 is a diagram illustrating a bottom surface of a cap assembly according to some embodiments of the present disclosure.
FIG. 16 is a diagram illustrating a cap plate according to some embodiments of the present disclosure.
FIG. 17 is a diagram illustrating a cap insulating layer according to some embodiments of the present disclosure.
FIG. 18 is a diagram illustrating a first electrode terminal and a second electrode terminal according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements and/or layers may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements and/or features as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

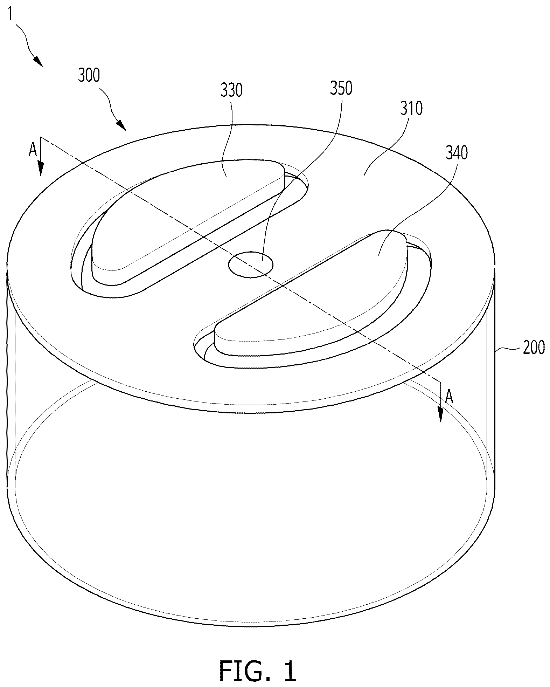

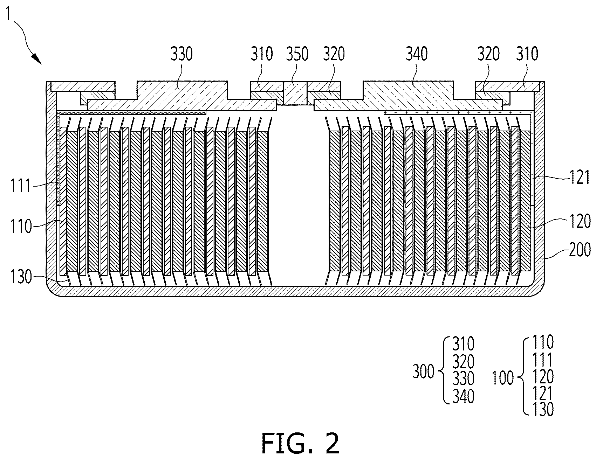

FIG. 1 is a perspective view of a secondary battery according to some embodiments of the present disclosure. FIG. 2 is a diagram illustrating a cross-section taken along line A-A of FIG. 1 according to some embodiments of the present disclosure.

According to some embodiments, a secondary battery 1 may be a coin cell or a button cell but is not limited thereto and may be a cylindrical or pin-type battery.

A coin cell or button cell is a thin coin or button -shaped battery and may refer to a battery in which the ratio of height to diameter (height/diameter) is less than or equal to 1, but is not limited thereto. Since a coin cell or button cell is mainly cylindrical, its cross-section in the horizontal direction is circular, but the present disclosure is not limited thereto, and a shape in which the cross-section in the horizontal direction is elliptical or polygonal may also be included. Here, the diameter may mean the maximum distance based on the horizontal direction of the battery, and the height may mean the maximum distance based on the vertical direction of the battery (the distance from a flat bottom surface to a flat top cross-section).

Referring to FIGS. 1 and 2, a secondary battery 1 according to some embodiments of the present disclosure may include an electrode assembly 100, a receiving can 200, and a cap assembly 300.

According to some embodiments, the electrode assembly 100 may include a first electrode 110, a second electrode 120, and a separator 130. The first electrode 110 may be a negative electrode, and the second electrode 120 may be a positive electrode. Of course, the reverse is also possible. The electrode assembly 100 may be a wound-type electrode assembly formed by winding the first electrode 110 and the second electrode 120 after an insulator, or the separator 130, is interposed between the first electrode 110 and the second electrode 120, but the present disclosure is not limited thereto.

According to some embodiments, the first electrode 110 may include a coating portion, which is a region where an active material is applied to both surfaces of a first substrate formed of a thin metal plate, and an uncoated portion, which is a region where the active material is not applied and the substrate is exposed. The first electrode 110 may include uncoated portions formed on both side surfaces of the first substrate in a winding length direction. The first electrode 110 may form a negative electrode by coating a negative electrode active material such as graphite or carbon on a metal substrate such as copper, a copper alloy, nickel, or a nickel alloy.

According to some embodiments, the second electrode 120 may include a coating portion, which is a region where an active material is applied to both surfaces of a second substrate formed of a thin metal plate, and an uncoated portion, which is a region where the active material is not applied and the substrate is exposed. The second electrode 120 may include uncoated portions formed on both side surfaces of the second substrate in the winding length direction. The second electrode 120 may form a positive electrode by coating a positive electrode active material such as a transition metal oxide on a metal substrate such as aluminum or an aluminum alloy.

According to some embodiments, the separator 130 may be located between the first electrode 110 and the second electrode 120. The separator 130 insulates the first electrode 110 and the second electrode 120 and may exchange lithium ions between the first electrode 110 and the second electrode 120. The separator 130 may have a sufficient length to completely insulate between the first electrode 110 and the second electrode 120 even if the electrode assembly 100 contracts or expands during the charging and discharging processes of the secondary battery 1.

According to some embodiments, a first electrode tab 111 may be disposed on an outer surface of the electrode assembly 100. The first electrode tab 111 may be separately formed and connected to an uncoated portion of the first electrode 110 or may be formed by stamping a part of the uncoated portion of the first electrode 110.

According to some embodiments, the first electrode tab 111 may be bent on one surface of the electrode assembly 100 facing a cap assembly 300 and connected to a first electrode terminal 330 of the cap assembly 300. The first electrode 110 and the first electrode terminal 330 may be electrically connected through the first electrode tab 111.

According to some embodiments, a second electrode tab 121 may be disposed on the outer surface of the electrode assembly 100. The second electrode tab 121 may be separately formed and connected to an uncoated portion of the second electrode 120 or may be formed by stamping a part of the uncoated portion.

According to some embodiments, the second electrode tab 121 may be bent on one surface of the electrode assembly 100 facing the cap assembly 300 and connected to a second electrode terminal 340 of the cap assembly 300. The second electrode 120 and the second electrode terminal 340 may be electrically connected through the second electrode tab 121.

According to some embodiments, the receiving can 200 may have one open portion to accommodate the electrode assembly 100. The receiving can 200 may form the overall appearance of the secondary battery 1. The receiving can 200 may have an open cylindrical shape. The receiving can 200 may include a circular bottom surface and a side wall portion extending perpendicularly from the circumference of the bottom surface. In the receiving can 200, a diameter of the bottom surface is greater than a height of the side wall portion, such that the secondary battery 1 may be configured to have a button or coin shape. In some embodiments, in the receiving can 200, a diameter of the bottom surface may be less than the height of the side wall portion.

According to some embodiments, an upper portion of the receiving can 200, opposite to the bottom surface of the receiving can 200, may be open, and a receiving space capable of accommodating the electrode assembly 100 may be exposed. After the electrode assembly 100 is accommodated in the receiving can 200, the cap assembly 300 may cover the open portion of the receiving can 200 to seal the electrode assembly 100. An upper end of a side wall of the receiving can 200 may have a step from outside the can (i.e., "the outside") to inside the can (i.e., "the inside"). So as to engage with the step of the upper end of the side wall of the receiving can 200, a cap plate 310 of the cap assembly 300 may be coupled by performing at least one of thermal fusion (for example, UV curing) or metal bonding (for example, welding, brazing, or soldering) when the cap plate 310 is in contact with an upper end of the side wall of the receiving can 200, but the present disclosure is not limited thereto.

According to some embodiments, the receiving can 200 may be insulated from the first electrode 110 and the second electrode 120. The receiving can 200 may not be connected to the first electrode 110, the second electrode 120, the first electrode tab 111, and the second electrode tab 121 and may not have electrical polarity.

According to some embodiments, a cap assembly 300 may close the open portion of the receiving can 200. The cap assembly 300 may cover the open portion of the receiving can 200 to seal the electrode assembly 100 from the outside.

According to some embodiments, the cap assembly 300 may include a cap plate 310, a cap insulating layer 320, a first electrode terminal 330, a second electrode terminal 340, and a sealer 350.

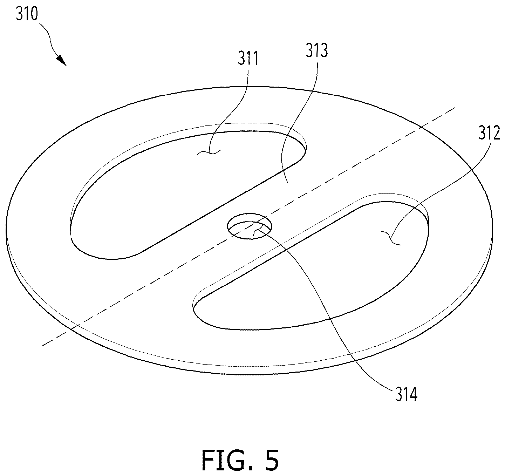

According to some embodiments, the cap plate 310 may include a first terminal hole 311 (see FIG. 5) through which the first electrode terminal 330 is exposed to the outside, a second terminal hole 312 (see FIG. 5) through which the second electrode terminal 340 is exposed to the outside, and an electrolyte injection hole 314 (see FIG. 5) configured for an electrolyte to be injected. The first terminal hole 311 and the second terminal hole 312 may be formed in the cap plate 310 in a symmetrical structure.

According to some embodiments, the cap plate 310 may be in contact with the upper end of the side wall of the receiving can 200. The cap plate 310 may include a same material as the receiving can 200 and may be thermally fused and coupled with the receiving can 200 or metal-bonded and coupled with the receiving can 200 depending on the material.

The receiving can 200 and the cap plate 310 may include a polymer material, but the receiving can 200 and the cap plate 310 are not limited thereto, and any non-metallic material with high strength, heat resistance, and chemical resistance may be applied. The receiving can 200 and the cap plate 310 may include a polymer material and may be coupled by thermal fusion.

The receiving can 200 and the cap plate 310 may include a metal material. The metal material may include stainless steel (SUS), aluminum, an aluminum alloy, or nickel-plated steel, but the metal material is not limited thereto. The receiving can 200 and the cap plate 310 may include a metal material and may be coupled by metal bonding.

According to some embodiments, the cap plate 310 may be insulated from the first electrode 110 and the second electrode 120. The cap plate 310 may be insulated from the first electrode 110, the second electrode 120, the first electrode tab 111, and the second electrode tab 121 and may not have electrical polarity.

According to some embodiments, a cap insulating layer 320 may be disposed on one surface (for example, a bottom surface) of the cap plate 310 to insulate the first electrode terminal 330 and the second electrode terminal 340 from the cap plate 310.

According to some embodiments, the first electrode terminal 330 may be connected to the first electrode tab 111. The first electrode terminal 330 may be exposed to the outside through the first terminal hole 311 of the cap plate 310. The first electrode terminal 330 may be inserted into the first terminal hole 311 of the cap plate 310. The first electrode terminal 330 may be spaced apart from the first terminal hole 311 of the cap plate 310 and may not be in contact with the cap plate 310.

According to some embodiments, the second electrode terminal 340 may be connected to the second electrode tab 121. The second electrode terminal 340 may be exposed to the outside through the second terminal hole 312 of the cap plate 310. The second electrode terminal 340 may be inserted into the second terminal hole 312 of the cap plate 310. The second electrode terminal 340 may be spaced apart from the second terminal hole 312 of the cap plate 310 and may not be in contact with the cap plate 310.

According to some embodiments, a sealer 350 may seal the electrolyte injection hole 314 (see FIG. 5) from the outside of the cap plate 310. The sealer 350 may prevent the electrolyte injected into the receiving can 200 from leaking through the electrolyte injection hole 314.

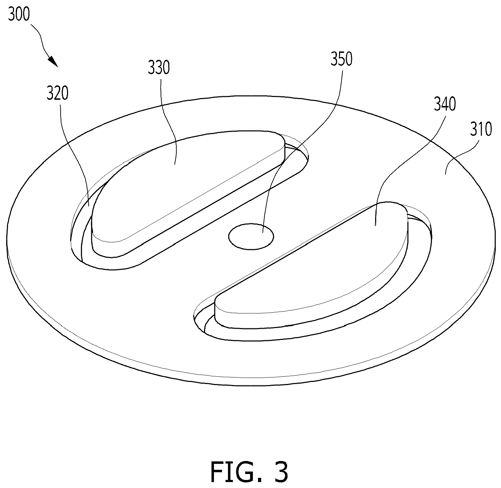

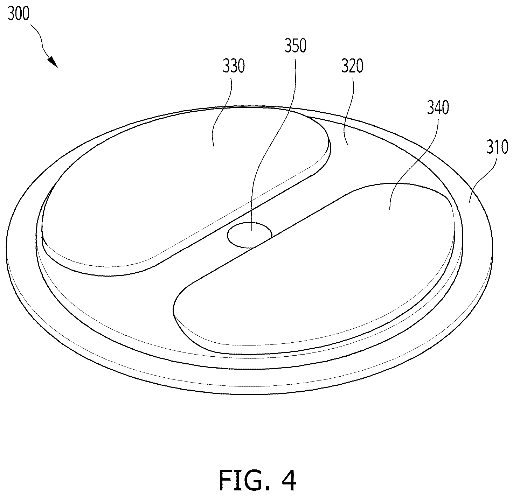

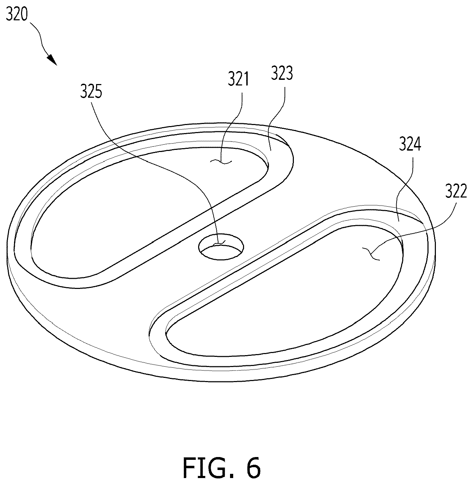

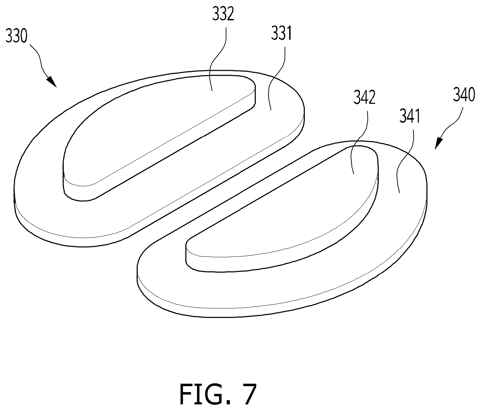

FIG. 3 is a diagram illustrating a top surface of a cap assembly according to some embodiments of the present disclosure. FIG. 4 is a diagram illustrating a bottom surface of a cap assembly according to some embodiments of the present disclosure. FIG. 5 is a diagram illustrating a cap plate according to some embodiments of the present disclosure. FIG. 6 is a diagram illustrating a cap insulating layer according to some embodiments of the present disclosure. FIG. 7 is a diagram illustrating a first electrode terminal and a second electrode terminal according to some embodiments of the present disclosure.

Referring to FIGS. 3 to 7, a cap assembly 300 according to some embodiments of the present disclosure may include a cap plate 310, a cap insulating layer 320, a first electrode terminal 330, a second electrode terminal 340, and a sealer 350.

According to some embodiments, the cap plate 310 may be disposed on the cap insulating layer 320. The cap plate 310 may be coupled with the receiving can 200 while covering the open portion of the receiving can 200. The first electrode terminal 330 may be exposed to the outside through a first terminal hole 311 formed in the cap plate 310. The second electrode terminal 340 may be exposed through a second terminal hole 312 formed in the cap plate 310.

According to some embodiments, the cap insulating layer 320 may be disposed between the cap plate 310 and the first electrode terminal 330 and the second electrode terminal 340. The cap insulating layer 320 may insulate between the cap plate 310 and the first electrode terminal 330 and may insulate between the cap plate 310 and the second electrode terminal 340.

As illustrated in FIG. 5, a cap plate 310 according to some embodiments may include a first terminal hole 311 through which a first electrode terminal 330 is exposed to the outside, a second terminal hole 312 through which a second electrode terminal 340 is exposed to the outside, and an electrolyte injection hole 314 configured for an electrolyte to be injected into the receiving can 200 (see FIG. 2).

According to some embodiments, the first terminal hole 311 and the second terminal hole 312 may have geometries that are symmetrical to each other. Further, the first terminal hole 311 and the second terminal hole 312 may have geometries that are line-symmetrical to each other.

According to some embodiments, the cap plate 310 may include a bridge portion 313 formed between the first terminal hole 311 and the second terminal hole 312. The bridge portion 313 may have a bar shape, but the bridge portion 313 is not limited thereto. The first terminal hole 311 and the second terminal hole 312 may have geometries that are symmetrical to each other with respect to the bridge portion 313. The electrolyte injection hole 314 may be formed in the bridge portion 313.

As illustrated in FIG. 6, a cap insulating layer 320 according to some embodiments may include a first through-hole 321 corresponding to the first terminal hole 311 and a second through-hole 322 corresponding to the second terminal hole 312. The cap insulating layer 320 may include a first depressed region 323 depressed along a circumference of the first through-hole 321 on a bottom surface and a second depressed region 324 depressed along a circumference of the second through-hole 322. The cap insulating layer 320 may include an electrolyte hole 325 corresponding to the electrolyte injection hole 314 formed in the cap plate 310.

According to some embodiments, a first bottom portion 331 of the first electrode terminal 330 may be inserted into the first depressed region 323. Particularly, the first bottom portion 331 of the first electrode terminal 330 may be fitted and fixed into the first depressed region 323 formed around the first through-hole 321.

According to some embodiments, a second bottom portion 341 of the second electrode terminal 340 may be inserted into the second depressed region 324. Particularly, the second bottom portion 341 of the second electrode terminal 340 may be fitted and fixed into the second depressed region 324 formed around the second through-hole 322.

According to some embodiments, an adhesive may be applied to the first depressed region 323 and the second depressed region 324, so that the first bottom portion 331 of the first electrode terminal 330 and the second bottom portion 341 of the second electrode terminal, which are in contact with each other, may be adhered and fixed, but the present disclosure is not limited thereto.

According to some embodiments, the electrolyte hole 325 may penetrate the cap insulating layer 320, the electrolyte hole 325 corresponding to the electrolyte injection hole 314 formed in the cap plate 310. The electrolyte hole 325 may serve as a passage through which an electrolyte injected into the secondary battery can be smoothly impregnated into the electrode assembly 100 (see FIG. 2). The electrolyte injection hole 314 and the electrolyte hole 325 may be sealed by a sealer 350.

As illustrated in FIG. 7, a first electrode terminal 330 and a second electrode terminal 340 according to some embodiments may have structures that are symmetrical to each other.

According to some embodiments, the first electrode terminal 330 may include a first bottom portion 331 connected to a first electrode tab 111 (see FIG. 2) and a first terminal portion 332 protruding from the first bottom portion 331 and inserted into the first terminal hole 311 and the first through-hole 321.

According to some embodiments, a bottom surface of the first bottom portion 331 may be connected to the first electrode tab 111. An upper surface and a portion of a side surface of the first bottom portion 331 may be in contact with the first depressed region 323 formed along the circumference of the first through-hole 321.

According to some embodiments, the first terminal portion 332 may be inserted into the first terminal hole 311 and the first through-hole 321 and exposed to the outside. The first terminal portion 332 may be exposed to the outside and connected to an external device (for example, a battery protection module).

According to some embodiments, the second electrode terminal 340 may include a second bottom portion 341 connected to a second electrode tab 121 (see FIG. 2) and a second terminal portion 342 protruding from the second bottom portion 341 and inserted into the second terminal hole 312 and the second through-hole 322.

According to some embodiments, a bottom surface of the second bottom portion 341 may be connected to the second electrode tab 121. An upper surface and a portion of a side surface of the second bottom portion 341 may be in contact with the second depressed region 324 formed along the circumference of the second through-hole 322.

According to some embodiments, the second terminal portion 342 may be inserted into the second terminal hole 312 and the second through-hole 322 and exposed to the outside. The second terminal portion 342 may be exposed to the outside and connected to an external device (for example, a battery protection module).

According to some embodiments, the first electrode terminal 330 may include at least one of stainless steel (SUS) or nickel (Ni). The second electrode terminal 340 may include aluminum (Al). However, the present disclosure is not limited thereto, and the first electrode terminal 330 may include a same material as the metal substrate of the first electrode 110, and the second electrode terminal 340 may include a same material as the metal substrate of the second electrode 120. When the first electrode 110 is a positive electrode and the second electrode 120 is a negative electrode, the first electrode terminal 330 may include aluminum (Al), and the second electrode terminal 340 may include at least one of stainless steel (SUS) or nickel (Ni).

According to some embodiments, the sealer 350 may include a same material as the cap plate 310. The sealer 350 may be coupled to the cap plate 310 by thermal fusion or by metal bonding depending on a material of the cap plate 310 and or the sealer 350.

The sealer 350 and the cap plate 310 may include a polymer material, but the sealer 350 and the cap plate 310 are not limited thereto, and any non-metallic material with high strength, heat resistance, and chemical resistance may be applied. The sealer 350 and the cap plate 310 may include a polymer material and may be coupled by thermal fusion.

The sealer 350 and the cap plate 310 may include a metal material. The metal material may include stainless steel (SUS), aluminum, an aluminum alloy, or nickel-plated steel, but the metal material is not limited thereto. The sealer 350 and the cap plate 310 may include a metal material and may be coupled by metal bonding.

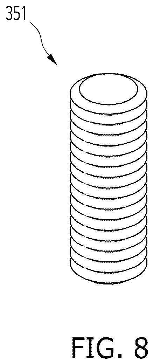

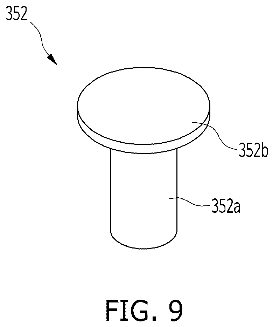

FIGS. 8 and 9 are diagrams that each illustrate a sealer according to some embodiments of the present disclosure. Sealers 351 and 352 illustrated in FIGS. 8 and 9, respectively, are diagrams illustrating the sealer 350 illustrated in FIG. 2.

Referring to FIGS. 5, 6, and 8, a sealer 351 according to some embodiments may include a screw thread formed on its outer circumferential surface. The sealer 351 may be screw coupled into the electrolyte injection hole 314 formed in the cap plate 310. Particularly, a screw thread may be formed on an outer circumferential surface of the sealer 351, and correspondingly, a female screw thread may be formed in the electrolyte injection hole 314, so that the sealer 351 may be screw coupled into the electrolyte injection hole 314. Even when a screw thread is not formed in the electrolyte injection hole 314, the sealer 351 may have a self-tapping shape, so that the sealer 351 can form a screw thread by itself during rotational insertion and can be coupled with the electrolyte injection hole 314. To enhance sealing performance, one end of the sealer 351 may be extended and screw coupled into the electrolyte hole 325 of the cap insulating layer 320.

Referring to FIGS. 5, 6, and 9, a sealer 352 according to some embodiments may include a body portion 352a inserted into the electrolyte injection hole 314 and a head portion 352b extending in a radial direction from one end of the body portion 352a and coupled with the cap plate 310. The body portion 352a has a shape corresponding to the shape of the electrolyte injection hole 314 and may be inserted into the electrolyte injection hole 314. One end of the body portion 352a may be extended and inserted into the electrolyte hole 325 of the cap insulating layer 320. One surface of the head portion 352b, which extends in the radial direction, may be in contact with one surface of the cap plate 310 and may be thermally fused or metal bonded.

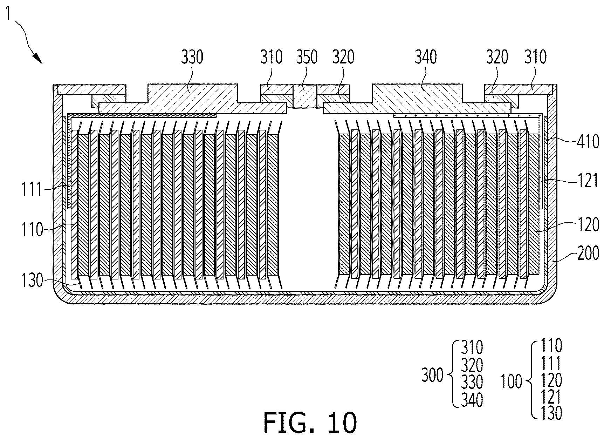

FIG. 10 is a cross-sectional view of a secondary battery including a first insulator according to some embodiments of the present disclosure. Hereinafter, the secondary battery illustrated in FIG. 10 will be described focusing on the differences from the secondary battery illustrated in FIG. 2, and a description of configurations corresponding to the secondary battery illustrated in FIG. 2 will be omitted.

Referring to FIG. 10, a receiving can 200 and a cap plate 310 may include a metal material and may be connected by welding. When an electrode assembly 100 is accommodated inside the metal receiving can 200, a first electrode 110 or a second electrode 120 may come into contact with the receiving can 200, causing a short circuit phenomenon.

To prevent the short circuit phenomenon, a secondary battery 1 according to some embodiments may further include a first insulator 410 surrounding an inner bottom surface and an inner side surface of the receiving can 200. The first insulator 410 may be interposed between the electrode assembly 100 and the receiving can 200 to insulate between the electrode assembly 100 and the receiving can 200.

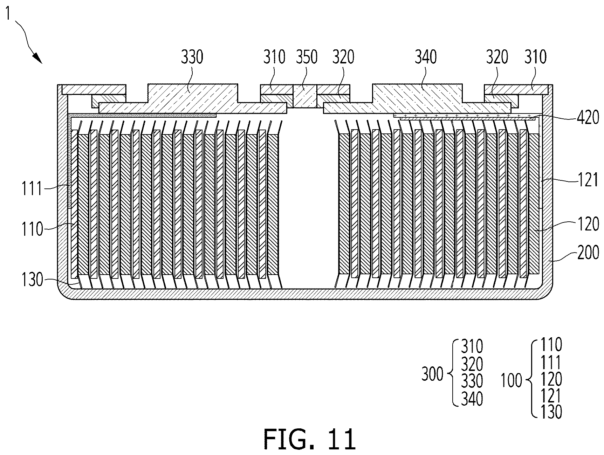

FIG. 11 is a cross-sectional view of a secondary battery including a second insulator according to some embodiments of the present disclosure. Hereinafter, the secondary battery illustrated in FIG. 11 will be described focusing on the differences from the secondary battery illustrated in FIG. 2, and a description of configurations corresponding to the secondary battery illustrated in FIG. 2 will be omitted.

Referring to FIG. 11, in a case where a first electrode 110 of an electrode assembly 100 is a negative electrode and a second electrode 120 is a positive electrode, the first electrode 110 may be formed longer than the second electrode 120 in the winding axis direction. When a second electrode tab 121 is bent on one surface of the electrode assembly 100 and connected to a second electrode terminal 340, the first electrode 110, which is formed longer than the second electrode 120, may come into contact with a second electrode tab 121, causing a short circuit phenomenon.

To prevent the short circuit phenomenon, a secondary battery 1 according to some embodiments may include a second insulator 420 that insulates the second electrode tab 121. One bent surface of the second electrode tab 121 is connected to the second electrode terminal 340, and another bent surface of the second electrode tab 121 may be insulated from the first electrode 110 by the second insulator 420. The second insulator 420 may be disposed on one surface of the second electrode tab 121 to insulate between the second electrode tab 121 and the first electrode 110.

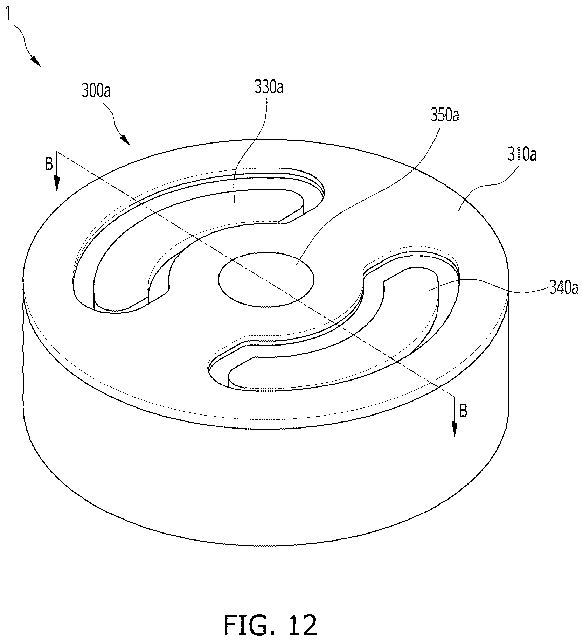

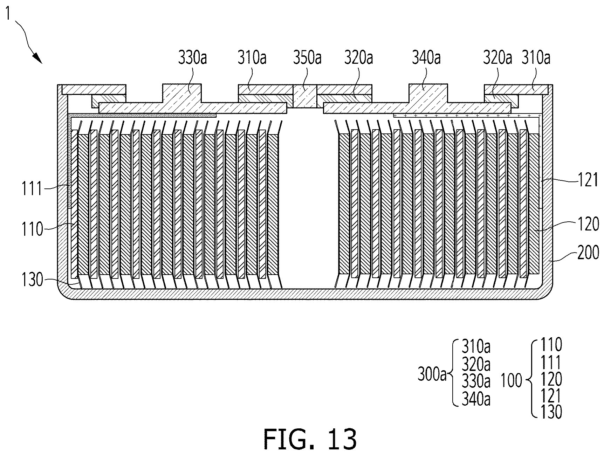

FIG. 12 is a perspective view of a secondary battery according to some embodiments of the present disclosure. FIG. 13 is a diagram illustrating a cross-section taken along line B-B of FIG. 12 according to some embodiments of the present disclosure. Hereinafter, the secondary battery illustrated in FIGS. 12 and 13 will be described focusing on the differences from the secondary battery illustrated in FIGS. 1 and 2, and a description of configurations corresponding to the secondary battery illustrated in FIGS. 1 and 2 will be omitted.

Referring to FIGS. 12 and 13, a secondary battery 1 according to some embodiments of the present disclosure may include an electrode assembly 100, a receiving can 200, and a cap assembly 300a.

According to some embodiments, the electrode assembly 100 may include a first electrode 110, a second electrode 120, and a separator 130. A first electrode tab 111 may be separately formed and may be connected to an uncoated portion of the first electrode 110 or may be formed by stamping a part of the uncoated portion of the first electrode 110. A second electrode tab 121 may be separately formed and may be connected to an uncoated portion of the second electrode 120 or may be formed by stamping a part of the uncoated portion of the second electrode 120. The first electrode tab 111 may be bent on one surface of the electrode assembly 100 facing a cap assembly 300a and may be connected to a first electrode terminal 330a of the cap assembly 300a. The first electrode 110 and the first electrode terminal 330a may be electrically connected through the first electrode tab 111. The second electrode tab 121 may be bent on one surface of the electrode assembly 100 facing the cap assembly 300a and may be connected to a second electrode terminal 340a of the cap assembly 300a. The second electrode 120 and the second electrode terminal 340a may be electrically connected through the second electrode tab 121.

According to some embodiments, the receiving can 200 may have one open portion to accommodate the electrode assembly 100. The receiving can 200 may form an overall appearance of the secondary battery 1. According to some embodiments, an upper portion of the receiving can 200, opposite to the bottom surface of the receiving can 200, may be open, and a receiving space capable of accommodating the electrode assembly 100 may be exposed. After the electrode assembly 100 is accommodated in the receiving can 200, the cap assembly 300a may cover the open portion of the receiving can 200 to seal the electrode assembly 100. An upper end of a side wall of the receiving can 200 may have a step from the outside to the inside. So as to engage with the step of an upper end of the side wall of the receiving can 200, a cap plate 310a of the cap assembly 300a may be coupled by performing at least one of thermal fusion (for example, UV curing) or metal bonding (for example, welding, brazing, or soldering) when the cap plate 310a is in contact with the upper end of the side wall of the receiving can 200, but the present disclosure is not limited thereto.

According to some embodiments, the receiving can 200 may be insulated from the first electrode 110 and the second electrode 120. The receiving can 200 may not be connected to the first electrode 110, the second electrode 120, the first electrode tab 111, and the second electrode tab 121 and may not have electrical polarity.

According to some embodiments, a cap assembly 300a may close the open portion of the receiving can 200. The cap assembly 300a may cover the open portion of the receiving can 200 to seal the electrode assembly 100 from the outside.

According to some embodiments, the cap assembly 300a may include a cap plate 310a, a cap insulating layer 320a, a first electrode terminal 330a, a second electrode terminal 340a, and a sealer 350a.

According to some embodiments, the cap plate 310a may include a first terminal hole 311a (see FIG. 5), through which the first electrode terminal 330a is exposed to the outside, a second terminal hole 312a (see FIG. 5), through which the second electrode terminal 340a is exposed to the outside, and an electrolyte injection hole 314a (see FIG. 5) configured for an electrolyte to be injected. The first terminal hole 311a and the second terminal hole 312a may be formed in the cap plate 310a in a symmetrical structure.

According to some embodiments, the cap plate 310a may include a bridge portion 313a formed between the first terminal hole 311a and the second terminal hole 312a. An electrolyte injection hole 314a may be formed in the bridge portion 313a.

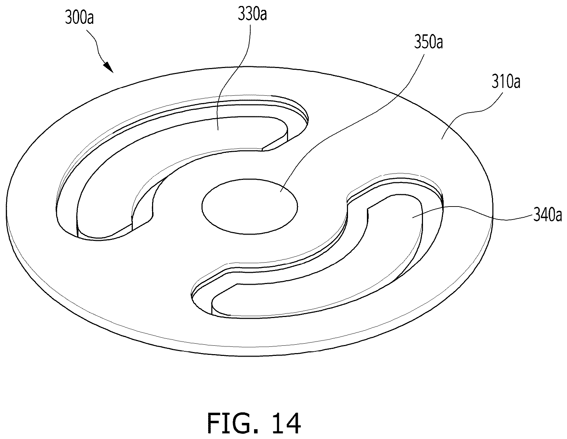

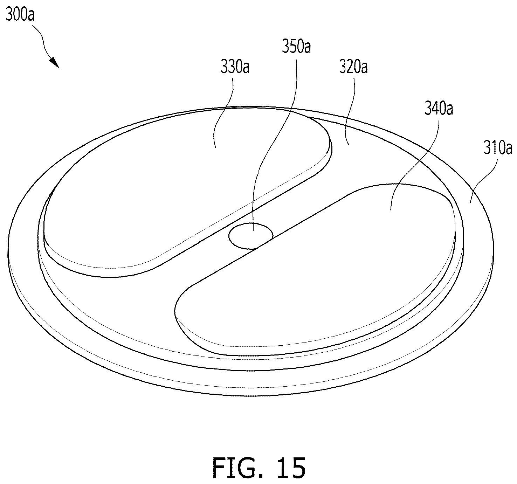

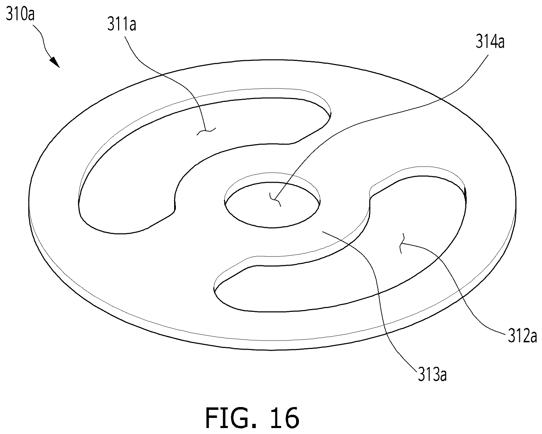

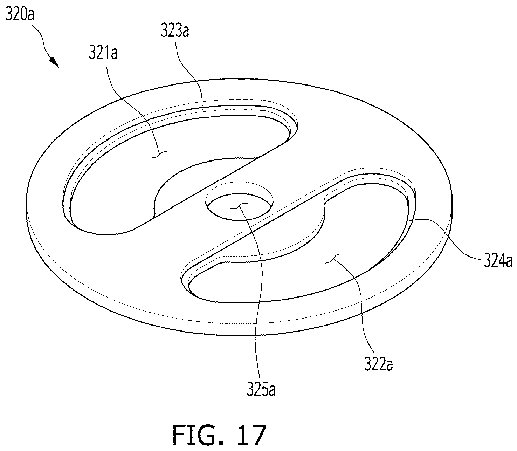

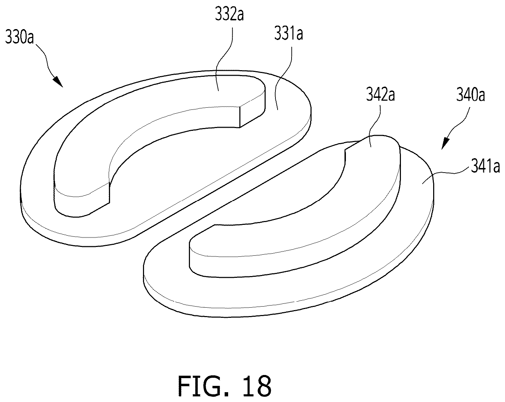

FIG. 14 is a diagram illustrating a top surface of a cap assembly according to some embodiments of the present disclosure. FIG. 15 is a diagram illustrating a bottom surface of a cap assembly according to some embodiments of the present disclosure. FIG. 16 is a diagram illustrating a cap plate according to some embodiments of the present disclosure. FIG. 17 is a diagram illustrating a cap insulating layer according to some embodiments of the present disclosure. FIG. 18 is a diagram illustrating a first electrode terminal and a second electrode terminal according to some embodiments of the present disclosure.

Hereinafter, the cap assembly illustrated in FIGS. 14 to 18 will be described focusing on the differences from the cap assembly illustrated in FIGS. 3 to 7, and a description of configurations corresponding to the cap assembly illustrated in FIGS. 3 to 7 will be omitted.

Referring to FIGS. 14 to 18, a cap assembly 300a according to some embodiments of the present disclosure may include a cap plate 310a, a cap insulating layer 320a, a first electrode terminal 330a, a second electrode terminal 340a, and a sealer 350a.

According to some embodiments, the cap plate 310a may be disposed on the cap insulating layer 320a. The cap plate 310a may be coupled with the receiving can 200 while covering the open portion of the receiving can 200. The first electrode terminal 330a may be exposed to the outside through a first terminal hole 311a formed in the cap plate 310a. The second electrode terminal 340a may be exposed through a second terminal hole 312a formed in the cap plate 310a.

According to some embodiments, the cap insulating layer 320a may be disposed between the cap plate 310a and the first electrode terminal 330a and the second electrode terminal 340a. The cap insulating layer 320a may insulate between the cap plate 310a and the first electrode terminal 330a and may insulate between the cap plate 310a and the second electrode terminal 340a.

As illustrated in FIG. 16, a cap plate 310a according to some embodiments may include a first terminal hole 311a through which a first electrode terminal 330a is exposed to the outside, a second terminal hole 312a through which a second electrode terminal 340a is exposed to the outside, and an electrolyte injection hole 314a configured for an electrolyte to be injected into a receiving can 200 (see FIG. 2).

According to some embodiments, the first terminal hole 311a and the second terminal hole 312a may have geometries that are symmetrical to each other. The first terminal hole 311a and the second terminal hole 312a may have geometries that are line-symmetrical to each other.

According to some embodiments, the cap plate 310a may further include a bridge portion 313a formed between the first terminal hole 311a and the second terminal hole 312a. An electrolyte injection hole 314a may be formed in the bridge portion 313a.

According to some embodiments, the bridge portion 313a may have a shape of which both ends protrude outward and correspond to a shape of the electrolyte injection hole 314a. The first terminal hole 311a and the second terminal hole 312a may have a curved shape with a curvature corresponding to a protruding shape of the bridge portion 313a. The bridge portion 313a may have a curved shape of which both ends of the bridge portion 313a protrude convexly according to the shape of the electrolyte injection hole 314a, and, accordingly, the first terminal hole 311a and the second terminal hole 312a may have an arcuate shape.

As illustrated in FIG. 17, a cap insulating layer 320a according to some embodiments may include a first through-hole 321a corresponding to the first terminal hole 311a and a second through-hole 322a corresponding to the second terminal hole 312a. The cap insulating layer 320a may include a first depressed region 323a depressed along a circumference of the first through-hole 321a on a bottom surface and a second depressed region 324a depressed along a circumference of the second through-hole 322a. The first depressed region 323a and the second depressed region 324a may have geometries corresponding to a first bottom portion 331a and a second terminal portion 342a of an electrode terminal, respectively.

The cap insulating layer 320a may include an electrolyte hole 325a corresponding to the electrolyte injection hole 314a formed in the cap plate 310a. The first through-hole 321a and the second through-hole 322a may have a curved shape (for example, an arcuate shape) for the first terminal hole 311a and for the second terminal hole 312a.

As illustrated in FIG. 18, a first electrode terminal 330a and a second electrode terminal 340a according to some embodiments may have structures that are symmetrical to each other. The first electrode terminal 330a may include a first bottom portion 331a connected to a first electrode tab 111 (see FIG. 13) and a first terminal portion 332a protruding from the first bottom portion 331a and inserted into the first terminal hole 311a and the first through-hole 321a. The second electrode terminal 340a may include a second bottom portion 341a connected to a second electrode tab 121 (see FIG. 13) and a second terminal portion 342a protruding from the second bottom portion 341a and inserted into the second terminal hole 312a and the second through-hole 322a.

The first bottom portion 331a may be inserted and fixed in the first depressed region 323a of the cap insulating layer 320a. The second bottom portion 341a may be inserted and fixed in the second depressed region 324a of the cap insulating layer 320a.

According to some embodiments, the first terminal portion 332a may pass through the first terminal hole 311a and the first through-hole 321a and may be exposed to the outside. The first terminal portion 332a may be exposed to the outside and may be connected to an external device (for example, a battery protection module).

According to some embodiments, the second terminal portion 342a may pass through the second terminal hole 312a and the second through-hole 322a and may be exposed to the outside. The second terminal portion 342a may be exposed to the outside and may be connected to an external device (for example, a battery protection module).

The outer circumferential surfaces of the first terminal portion 332a and the second terminal portion 342a may have a curved shape to correspond to curvatures of the first terminal hole 311a and the second terminal hole 312a, respectively. The first terminal portion 332a and the second terminal portion 342a extend from the first bottom portion 331a and the second bottom portion 341a, respectively, and outer circumferences of first terminal portion 332a and the second terminal portion 342a may have a curved-surface shape corresponding to the arcuate shape of the first terminal hole 311a and the second terminal hole 312a and corresponding to the convexly protruding shape of the bridge portion 313a.

Although the present disclosure has been described above with respect to embodiments thereof, the present disclosure is not limited thereto. Various modifications and variations can be made thereto by those skilled in the art.

### DESCRIPTION OF REFERENCE NUMERALS

1: Secondary battery
100: Electrode assembly
110: First electrode
111: First electrode tab
120: Second electrode
121: Second electrode tab
130: Separator
200: Receiving can
300, 300a: Cap assembly
310, 310a: Cap plate
311, 311a: First terminal hole
312, 312a: Second terminal hole
313, 313a: Bridge portion
314, 314a: Electrolyte injection hole
320, 320a: Cap insulating layer
321, 321a: First through-hole
322, 322a: Second through-hole
323, 323a: First depressed region
324, 324a: Second depressed region
330, 330a: First electrode terminal
340, 340a: Second electrode terminal
350: Sealer
410: First insulator
420: Second insulator

## Claims

1. A secondary battery (1) comprising:
an electrode assembly (100) comprising:
a first electrode (110);
a separator (130);
a second electrode (120);
a first electrode tab (111) connected to the first electrode (110); and
a second electrode tab (121) connected to the second electrode (120);
a receiving can (200) having an open portion to accommodate the electrode assembly (100); and
a cap assembly (300) closing the open portion of the receiving can (200), the cap assembly (300) comprising:
a first electrode terminal (330) connected to the first electrode tab (111);
a second electrode terminal (340) connected to the second electrode tab (121);
a cap plate (310) comprising a first terminal hole (311) through which the first electrode terminal (330) is exposed to outside of the cap assembly (300);
a second terminal hole (312) through which the second electrode terminal 340 is exposed to outside of the cap assembly (300);
an electrolyte injection hole (314) through which an electrolyte is injected into the receiving can (200); and
a sealer (350) sealing the electrolyte injection hole (314).

2. The secondary battery (1) as claimed in claim 1, wherein the cap plate (310) further comprises a bridge portion (313) between the first terminal hole (311) and the second terminal hole (312), and
wherein preferably the electrolyte injection hole (314) is in the bridge portion (313).

3. The secondary battery (1) as claimed in claim 2, wherein the bridge portion (313) has a bar shape.

4. The secondary battery (1) as claimed in any one of the preceding claims, wherein the cap assembly (300) comprises a cap insulating layer (320) comprising:
a first through-hole (321) corresponding to the first terminal hole (311);
and
a second through-hole (322) corresponding to the second terminal hole (312),
wherein the cap insulating layer (320) insulates the first electrode terminal (330) and the second electrode terminal (340) from the cap plate (310), and
wherein the first electrode terminal (330) is inserted into the first terminal hole (311) and the first through-hole (321), and the second electrode terminal (340) is inserted into the second terminal hole (312) and the second through-hole (322).

5. The secondary battery (1) as claimed in claim 4, wherein the first electrode terminal (330) comprises:
a first bottom portion (331) connected to the first electrode tab (111); and
a first terminal portion (332) protruding from the first bottom portion (331) and passing through the first terminal hole (311) and the first through-hole (321), and
wherein the second electrode terminal (340) comprises:
a second bottom portion (341) connected to the second electrode tab (121); and
a second terminal portion (342) protruding from the second bottom portion (341) and passing through the second terminal hole (312) and the second through-hole (322).

6. The secondary battery (1) as claimed in claim 5, wherein the cap insulating layer (320) comprises:
a first depressed region (323) depressed along a circumference of the first through-hole (321); and
a second depressed region (324) depressed along a circumference of the second through-hole (322),
wherein the first bottom portion (331) is inserted into the first depressed region (323), and
wherein the second bottom portion (341) is inserted into the second depressed region (324).

7. The secondary battery (1) as claimed in any one of the preceding claims, wherein both the receiving can (200) and the cap plate (310) comprise a same material.

8. The secondary battery (1) as claimed in any one of the preceding claims, wherein both the receiving can (200) and the cap plate (310) comprise a polymer material;
wherein preferably the receiving can (200) and the cap plate (310) are coupled to each other by thermal fusion.

9. The secondary battery (1) as claimed in any one of the claims 1 to 7, wherein both the receiving can (200) and the cap plate (310) comprise a metal material;
wherein preferably the receiving can (200) and the cap plate (310) are coupled to each other by metal bonding.

10. The secondary battery (1) as claimed in claim 9, further comprising a first insulator (410) surrounding an inner bottom surface of the receiving can (200) and surrounding an inner side surface of the receiving can (200).

11. The secondary battery (1) as claimed in any one of the claims 2 to 10, wherein the bridge portion (313a) has a shape of which both ends of the bridge portion (313a) protrude outward and correspond to a shape of the electrolyte injection hole (314a).

12. The secondary battery (1) as claimed in claim 11, wherein the first terminal hole (311a) and the second terminal hole (312a) each have a curved shape with a curvature corresponding to a protruding shape of the bridge portion (313a),
wherein the first electrode terminal (330a) comprises a first terminal portion (332a),
wherein the second electrode terminal (340a) comprises a second terminal portion (342a), and
wherein an outer circumferential surface of each of the first terminal portion (332a) and the second terminal portion (342a) has a curved surface shape corresponding to the curvature of the first terminal hole (311a) and the second terminal hole (312a), respectively.

13. The secondary battery (1) as claimed in any one of the preceding claims, wherein the sealer (351) comprises a screw thread on an outer circumferential surface of the sealer (351), and
wherein the sealer (351) is screw coupled into the electrolyte injection hole (314).

14. The secondary battery (1) as claimed in any one of the preceding claims, wherein the sealer (352) comprises:
a body portion (352a) inserted into the electrolyte injection hole (314);
and
a head portion (352b) extending in a radial direction from one end of the body portion (352a),
wherein the head portion (352b) is coupled to the cap plate (310).

15. The secondary battery (1) as claimed in any one of the preceding claims, wherein the sealer (350) comprises a same material as the cap plate (310), and
wherein the sealer (350) is coupled with the cap plate (310) by thermal fusion or by metal bonding.
